# EUROPÄISCHE PATENTANMELDUNG

(11) **EP 2 921 430 A1**
(43) Veröffentlichungstag der Anmeldung: **23.09.2015**
(21) Anmeldenummer: 15159527.9
(22) Anmeldetag: 17.03.2015
(51) Int. Cl.: B65G 17/02, B65G 39/071

(54) **Förderband, und damit ausgestattetes Fahrzeug**

(30) Priorität: 17.03.2014 DE 202014101217 U
(71) Anmelder: Terbrack, Norbert, 48691 Vreden (DE); Wilhelm Severt Maschinenbau GmbH, 48691 Vreden (DE)
(72) Erfinder: Terbrack, Norbert, 48691 Vreden (DE); Severt, Wilhelm, 48691 Vreden (DE)
(74) Vertreter: Habbel, Ludwig

(57) **Zusammenfassung**

Bei einem Förderband, mit einem umlaufenden, um zwei Umlenkelemente geführten Band, und mit Antriebselementen, welche seitlich neben dem Band angeordnet sind, zusammen mit dem Band beweglich sind, und mit dem Band antriebswirksam verbunden sind, derart, dass durch die Bewegung der Antriebselemente das Band mitgenommen wird, schlägt die Erfindung vor, dass die Antriebselemente beiderseits des Bandes jeweils ein flexibles Zugelement aufweisen, sowie Mitnehmer, die einerseits am Antriebselement und andererseits am Band befestigt sind, wobei das flexible Zugelement im Querschnitt höher ausgestaltet ist als die Mitnehmer, und innerhalb eines Führungsprofils verläuft, welches eine im Wesentlich C-förmig umrandete Ausnehmung aufweist, wobei die Ausnehmung erstens einen Hohlraum und zweitens einen daran anschließenden Schlitz bildet, und wobei sich das flexible Zugelement längs durch den Hohlraum erstreckt und durch den Schlitz hindurch mit dem Band verbunden ist.

## Beschreibung

Die Erfindung betrifft ein Förderband nach dem Oberbegriff des Anspruchs 1 sowie ein mit einem derartigen Förderband ausgestattetes Nutzfahrzeug.

Gattungsgemäße Förderbänder sind aus der Praxis bekannt. In der Fahrzeugindustrie dienen derartige Förderbänder beispielsweise dazu, das Ladegut aus dem Laderaum eines Nutzfahrzeugs herauszufördern, beispielsweise aus einer Mulde.

Problematisch ist eine ungleichmäßige Beschickung des Förderbandes mit Ladung. Wenn die Ladung auf dem eigentlichen Band des Förderbandes nicht mittig, sondern beispielsweise seitlich liegt, kann dies einen Schräglauf des Bandes und damit Störungen im Betrieb des Förderbandes hervorrufen. In vielen industriellen Anwendungen wird das Fördergut durch vorgeschaltete Aufgabeeinrichtungen auf das Band des Förderbandes aufgegeben und auf diese Weise ein möglichst gleichmäßiger Bandlauf sichergestellt. Insbesondere bei der Anwendung in einem Nutzfahrzeug kann allerdings das Problem auftreten, dass das Ladegut ungleichmäßig nach unten nachrutscht und insofern nicht optimal auf dem Förderband verteilt aufliegt. Im Vergleich zu vielen industriellen Anwendungen ist zudem die Länge des Förderbandes in einem Nutzfahrzeug vergleichsweise kurz, was die Empfindlichkeit des Förderbandes gegenüber einem unerwünschten Schräglauf des Bandes verstärkt.

Aus der DE 20 2005 013 005 U1 ist eine Förderanlage bekannt, bei der ein Band durch Mitnehmer angetrieben ist, die an den beiden gegenüberliegenden Längsseiten des Bandes auf das Band einwirken.

Aus der DE 1 922 596 A ist eine Antriebsvorrichtung für eine über Kopf laufende Förderanlage bekannt, die eine Förderkette aufweist, sowie eine Antriebskette, welche mithilfe von Mitnehmern auf die Förderkette einwirkt.

Aus der DE 20 2007 003 178 U1 ist ein Bandförderer bekannt, mit einem zwischen Umlenkrollen umlaufenden Fördergurt.

Der Erfindung liegt die Aufgabe zugrunde, ein gattungsgemäßes Förderband dahingehend zu verbessern, dass dieses einen zuverlässigen Bandlauf und somit einen möglichst ungestörten Betrieb des Förderbandes sicherstellt. Weiterhin liegt der Erfindung die Aufgabe zugrunde, ein Nutzfahrzeug anzugeben, dessen Ladung mittels eines Förderbandes entladen werden kann, wobei das Förderband möglichst zuverlässig und störungsfrei betrieben werden kann.

Diese Aufgabe wird durch ein Förderband mit den Merkmalen des Anspruchs 1 sowie durch ein Nutzfahrzeug nach Anspruch 17 gelöst. Vorteilhafte Ausgestaltungen sind in den Unteransprüchen beschrieben.

Die Erfindung schlägt mit anderen Worten vor, einen Gleichlauf des Bandes dadurch zu sichern, dass das Band nicht nur beispielsweise durch Umlenk- und Antriebsrollen angetrieben wird, sondern an seinen beiden Seiten Antriebselemente vorgesehen sind. Diese beidseitigen Antriebselemente sind als flexible Zugelemente ausgestaltet, die somit mitsamt dem eigentlichen Band umlaufen können. Mitnehmer erstrecken sich von diesen beiden flexiblen Zugelementen zum Band und sorgen dafür, dass bei Antrieb des Zugelementes das Band mitgenommen und auf diese Weise angetrieben wird. Auf diese Weise ergibt sich über die gesamte Länge des Förderbandes ein möglichst gleichmäßiger Antrieb des Bandes, wodurch der Bandlauf unempfindlicher gegenüber Störungen wie beispielsweise asymmetrischen Belastungen ist.

Weiterhin ist vorgesehen, dass die flexiblen Zugelemente im Querschnitt höher ausgestaltet sind als die Mitnehmer, die sich zum Band des Förderbandes erstrecken. Hierdurch wird es möglich, die flexiblen Zugelemente in Führungsprofilen zu führen, die eine im Wesentlichen C-förmig umrandete Ausnehmung aufweisen. Die Führungsprofile weisen dementsprechend eine im Wesentlichen T-förmige, Omega-förmige oder kreuzförmige Nut auf. Im größeren Hohlraum dieser Ausnehmung läuft das flexible Zugelement und durch den daran anschließenden Schlitz ist das flexible Zugelement mit dem Band verbunden. Dadurch wird ein Hinterschnitt geschaffen und das flexible Zugelement zuverlässig in dem Führungsprofil gehalten. Der Abstand der beiden flexiblen Zugelemente zueinander wird daher auch bei Belastung des Bandes nicht verändert, sondern vielmehr unverändert beibehalten, belastungsbedingte Durchbiegungen des Bandes, die ansonsten zu einer Dislozierung eines flexiblen Zugelementes führen könnten und damit zu einem ungleichmäßigen Bandlauf, werden auf diese Weise vermieden.

Vorteilhaft kann das flexible Zugelement als Kette ausgestaltet sein. Die Kette bewirkt die Übertragung hoher Zugkräfte bei geringen Anschaffungskosten des flexiblen Zugelements. Zudem ermöglicht eine Kette eine problemlose Anbringung von Mitnehmern, die sich dann von der Kette bis zum Band des Förderbandes erstrecken.

Dabei kann die Kette vorteilhaft als Gliederkette ausgestaltet sein, die im Unterschied zu beispielsweise Rollenketten oder anderen Ketten eine besonders preisgünstige und handelsübliche Ausgestaltung einer Kette darstellt. Im Reparaturfall kann eine derartige Kette voraussichtlich problemlos mit den Hilfsmitteln repariert werden, die ohnehin beim Betreiber vorhanden sind, so dass die Beschaffung von speziellen Ersatzteilen oder die Anreise von Reparaturpersonal nicht erforderlich ist und somit eine hohe Anlagenverfügbarkeit für das Förderband gewährleistet werden kann.

Vorteilhaft können die Mitnehmer als Flacheisen ausgestaltet sein, die jeweils an einem Glied der Kette befestigt sind. Wenn die Mitnehmer und die Glieder der Kette jeweils aus Stahl bestehen, kann eine vorteilhafte Verbindung der Mitnehmer mit dem jeweiligen Kettenglied dadurch bewirkt werden, dass der Mitnehmer an ein Glied der Kette angeschweißt ist. Abgesehen von der robusten und mechanisch hochbelastbaren Verbindung wird auch hierdurch eine einfache Instandhaltung des vorschlagsgemäßen Förderbandes unterstützt und Reparaturen innerhalb kürzester Zeit ermöglicht.

Vorteilhaft kann das Obertrum des Bandes auf einem Tisch laufen, so dass es nach unten hin abgestützt ist und auch bei Beladung des Bandes gegen Durchbiegungen zuverlässig gesichert ist. Auf diese Weise wirken die ansonsten durch eine Durchbiegung hervorgerufenen Kräfte nicht auf die beiden seitlichen Zugelemente ein, so dass die Zugelemente dagegen geschützt sind, bei einer auftretenden Gewichtsbelastung des Band-Obertrums zueinander gezogen zu werden. Dementsprechend wird das Führungsprofil von derartigen Belastungen entlastet.

Der Tisch ist dabei als Gitterrost ausgestaltet, der aus mehreren sich kreuzenden Stäben gebildet ist, wobei die Stäbe mit einem flachen Querschnittsprofil ausgestaltet sind, welches sich aufrecht bzw. hochkant erstreckt, so dass einerseits eine möglichst geringe Kontaktfläche zwischen dem Tisch und dem Band und somit ein möglichst geringer Reibungswiderstand sichergestellt werden kann, andererseits jedoch eine optimal durchbiegungssteife Ausgestaltung des Tisches gewährleistet ist. Durch die geringe Kontaktfläche zwischen dem Tisch und dem Band wird zudem ein problemloser Band-Anlauf gewährleistet, wenn das Förderband unter feuchten und kalten Bedingungen betrieben wird und beispielsweise die Gefahr besteht, dass das Obertrum des Bandes auf dem Tisch anfriert. Die geringe Kontaktfläche ermöglicht ein problemloses Lösen des Bandes und die Überwindung der dementsprechenden Haltekräfte auch ohne das Förderband mit einem besonders starken und teuren Antriebsmotor ausstatten zu müssen.

Vorteilhaft kann der Gitterrost Stäbe aus einem Kunststoffmaterial aufweisen, so dass der Gitterrost mit einem geringen Gewicht hergestellt werden kann, was beispielsweise bei der Verwendung des Förderbandes in einem Nutzfahrzeug vorteilhaft ist. Zudem wird auf diese Weise automatisch ein perfekter Korrosionsschutz für den Tisch des Förderbandes gewährleistet, da ein nicht-korrosives Material für die Stäbe verwendet wird. Insbesondere kann vorteilhaft der gesamte Gitterrost ausschließlich Stäbe aus Kunststoffmaterial aufweisen, beispielsweise aus einem faserverstärkten Kunststoff, wie zum Beispiel GFK.

Eine möglichst gleichmäßige Belastung des Bandes kann vorteilhaft dadurch bewirkt werden, dass das Band nicht nur durch die beiden seitlichen Antriebselemente in Form der flexiblen Zugelemente angetrieben wird, sondern auch durch eine angetriebene Welle und zwar in Form eines Umlenkelementes an einem oder an beiden Enden des Förderbandes. Diese angetriebene Welle erstreckt sich quer zur Laufrichtung des Bandes und weist eine ballig geformte Oberfläche auf. Durch diese ballige Ausformung entwickeln sich die höchsten Zugkräfte, welche diese angetriebene Welle auf das Band des Förderbandes überträgt, in der Bandmitte, so dass auch hierdurch ein stabiler Längslauf des Bandes unterstützt wird und den Gefahren eines Schräglaufes des Bandes entgegengewirkt wird.

Das Band des Förderbandes wird quer zu seiner Längsrichtung in drei Bereiche unterteilt. Ein mittlerer Bereich wird als Förderbereich bezeichnet und dient zur Aufnahme des zu transportierenden Guts. Beiderseits dieses Förderbereichs weist das Band jeweils einen Randbereich auf. Die nach außen gerichtete Oberseite des Bandes ist in den beiden seitlichen Randbereichen glatt ausgestaltet oder weist zumindest Zonen auf, die sich über die ganze Länge des Bandes erstrecken und in Bandlaufrichtung glatt ausgestaltet sind. Beiderseits des Förderbereichs des Bandes weist das Förderband jeweils eine seitliche Dichtung auf, die sich bis an eine derartige glatte Zone eines Randbereichs erstreckt. Dadurch, dass die Bandoberseite dort nicht profiliert ausgestaltet ist, wo die Dichtung an das Band des Förderbandes anschließt, kann eine optimale Dichtungswirkung sichergestellt werden. Quer verlaufende Mitnehmer, die sich wie die Sprossen einer Leiter über die gesamte Breite des Bandes erstrecken, sind vorschlagsgemäß nicht erforderlich, so dass derartige Mitnehmer, die sich über die ganze Breite des Bandes erstrecken, weder an der inneren Oberfläche des Bandes, wo dieses den Tragrollen, Umlenkrollen u. dgl. anliegt und einen ruhigen Bandlauf stören würde noch an der äußeren Oberfläche des Bandes erforderlich sind, wo sie einen dichten Anschluss der Dichtungen an die Bandoberseite verhindern würden.

Vorteilhaft kann die Oberseite des Bandes jedoch profiliert ausgestaltet sein, nämlich im Förderbereich, wo diese Profilierungen als Förderhilfen in Form von Erhebungen vorgesehen sein können. Diese Förderhilfen bewirken formschlussartig einen besseren Transport des auf dem Band aufliegenden Transportguts.

Die Förderhilfen können vorzugsweise in das Band einvulkanisiert sein, so dass das Band eine geschlossene Oberseite aufweist. Im Unterschied von Förderhilfen, die in Form von Profilleisten mit dem Band verschraubt sein können, wird auf diese Weise die Bildung von Spalten vermieden, in die Transportgut in unerwünschter Weise geraten könnte, so dass das vorschlagsgemäß ausgestaltete Förderband hygienisch vorteilhaft gesäubert werden kann. Durch die Vermeidung von Spalten wird zudem die mechanische Stabilität des Förderbandes vorteilhaft beeinflusst, weil Hindernisse, die in einen Spalt zwischen der Förderhilfe und dem Band geraten könnten und zur Beschädigung des Bandes bzw. zum Ablösen der Förderhilfe führen könnten, bei der beschriebenen vorteilhaften Ausgestaltung des Förderbandes keinen Schaden anrichten können, da die entsprechenden Spalten zwischen Förderhilfe und Band vermieden werden.

Vorteilhaft kann das Band mit Stabilisierungselementen versehen sein, die sich quer zur Bandlängsachse erstrecken. Diese Stabilisierungselemente können entweder von außen an das Band angesetzt sein oder in das Bandmaterial einvulkanisiert sein. Bei entsprechender Formgebung und Anordnung können die Stabilisierungselemente gleichzeitig auch die Förderhilfen bilden. Aber auch wenn keine Förderhilfen vorgesehen sind, oder wenn die Förderhilfen nicht in das Band einvulkanisiert sind, können die Stabilisierungselemente vorgesehen sein, beispielsweise indem sie an die Unter- bzw. Innenseite des Bandes angeschraubt sind. Wenn eine hohe Gewichtsbelastung beispielsweise auf die Bandmitte einwirkt, können die Zugkräfte, die an den beiden Längsseiten an das Band angreifen, zu einer Verformung des Bandes führen, die in Draufsicht bogenförmig verläuft. Die Stabilisierungselemente verhindern oder verringern zumindest eine derartige Verformung und steifen das Bandmaterial in Bandlängsrichtung aus. Beispielsweise können metallische Drähte mit rundem Querschnitt die Stabilisierungselemente bilden und quer zur Bandlängsrichtung in das Bandmaterial einvulkanisiert sein. Oder die Stabilisierungselemente können durch einen länglichen Querschnitt und durch ihre liegende Anordnung in Bandlängsrichtung besonders biegesteif ausgestaltet sein, so dass derartige flache Metallstäbe beispielsweise von innen, den umlenken Elementen benachbart, an das Bandmaterial angeschraubt sein können.

Vorteilhaft kann vorgesehen sein, dass die Antriebselemente wenigstens ein weiteres flexibles Zugelement aufweisen, welches gemeinsam mit dem Band umläuft und zwischen den beiderseits des Bandes vorgesehenen flexiblen Zugelementen angeordnet ist. Beispielsweise kann eine weitere Kette vorgesehen sein, die ebenfalls in einem Führungsprofil geführt ist und Mitnehmer aufweist, wobei die Mitnehmer an die Unter- bzw. Innenseite des umlaufenden Bandes anschließen. Stütz- oder Umlenkrollen können entweder zweigeteilt ausgestaltet sein, so das dazwischen ein Freiraum verbleibt, durch welchen diese zusätzliche Kette verläuft, oder sie können an ihrem äußeren Umfang eine umlaufende Nut aufweisen, durch welche sich die Kette erstreckt. Das wenigstens eine weitere flexible Zugelement verbessert sowohl die möglichst gleichmäßige Einleitung der Antriebskräfte auf das Band als auch die Führung des Bandes, um dieses gegen Schräglauf zu sichern.

Die Mitnehmer dieses wenigstens einen weiteren flexiblen Zugelements sind vorzugsweise mit dem Band verschraubt. Eine zuverlässige und gleichzeitig wartungsfreundliche Verbindung wird auf diese Weise geschaffen. Die Schrauben können sich durch das Bandmaterial erstrecken, jedoch können vorzugsweise an der Unter- bzw. Innenseite des Bandes Muttern in das Bandmaterial einvulkanisiert sein, do dass die Ober- bzw. Außenseite des Bandes geschlossen ausgestaltet werden kann. Zur Aufnahme einvulkanisierter Muttern können an der Unter- bzw. Innenseite des Bandes Vorsprünge vorgesehen sein, ähnlich wie die für die Ober- bzw. Außenseite des Bandes beschriebenen Förderhilfen, um eine stabile Verankerung der Muttern zu ermöglichen.

Das wenigstens eine weitere flexible Zugelement kann vorzugsweise dort, wo es auf das Obertrum des Bandes einwirkt, auf einer Lagerung aufliegen, so dass das Band gegen Durchhängen gesichert ist. Diese Lagerung bewirkt wenigstens, dass das Eigengewicht des weiteren Zugelements nicht das Obertrum des Bandes nach unten zieht, und gegebenenfalls kann die Lagerung des weiteren Zugelements sogar das Obertrum des Bandes stützen, also nicht nur das Eigengewicht des weiteren Zugelements aufnehmen, sondern auch einen Teil des Gewichts des mit Fördergut beladenen Bandes.

Vorteilhaft können Spannelemente vorgesehen sein, mittels welcher die Spannung des Bandes unabhängig von der Spannung der flexiblen Zugelemente einstellbar ist. Dem Fachmann sind hierzu mehrere Möglichkeiten bekannt. Beispielsweise können Spanner vorgesehen sein, die das zu spannende Element nicht geradlinig verlaufen lassen, sondern es aus diesem geradlinigen Verlauf auslenken, um dessen Spannung zu erhöhen. Oder es kann der Abstand der beiden äußeren Umlenkelemente zueinander veränderlich einstellbar sein, um die Spannung des Bandes zu beeinflussen, und in ähnlicher Weise können verstellbar gelagerte Umlenkräder, um welche die flexiblen Zugelemente umlaufen, dazu dienen, die Spannung der Zugelemente zu beeinflussen. Auch die Spannung der flexiblen Zugelemente kann vorteilhaft für jedes einzelne Zugelement individuell einstellbar sein.

Vorteilhaft können nicht nur am Obertrum, sondern auch am Untertrum die beiden Zugelemente jeweils in einem Führungsprofil geführt sein, welches auf beiden Längsseiten des Bandes die dortigen flexiblen Zugelemente in einem vorbestimmten Abstand zueinander führt. Diese Führung des Untertrums verhindert ein Durchhängen des Bandes im Bereich des Untertrums und somit einen vorzeitigen Verschleiß sowie unerwünschte Verschmutzungen, was ansonsten bei einem entsprechend durchhängenden Untertrum nicht auszuschließen wäre.

Die flexiblen Zugelemente verlaufen entlang den beiden Längsseiten des Bandes in Führungsprofilen. Im Sinne einer wirtschaftlichen und konstruktiv einfachen Herstellung des Förderbandes ist es vorteilhaft, wenn im Bereich dieser beiden Längsseiten keine Antriebe unmittelbar auf die Zugelemente einwirken müssen. Im Bereich der beiden Bandumlenkungen an den beiden Enden des Bandes hingegen können Antriebselemente problemlos antriebswirksam auf die flexiblen Zugelemente einwirken. Beispielsweise können hier Zahnräder in als Ketten ausgestaltete Zugelemente eingreifen. Dabei ist vorteilhaft, dass die Zahnräder die Zugelemente nicht nur antriebswirksam beaufschlagen, sondern dass sie gleichzeitig die Zugelemente auch in seitlicher Richtung führen. Auf diese Weise können als Führungsprofile wirtschaftlich vorteilhaft geradlinige Profilstangen verwendet werden und es sind keine speziellen Profilbauteile erforderlich, die im Bereich der beiden Bandumlenkungen jeweils gebogen verlaufen würden und die sicherstellen würden, dass ein in eine gerade Profilstange ein laufendes Zugelement präzise in die Führungsnut der Profilstange eingeführt wird. Durch die Antriebselemente, die auch in seitlicher Richtung führungswirksam sind, ist eine präzise Führung eines flexiblen Zugelementes sichergestellt, damit dieses problemlos in die Führungsnut seines Führungsprofils einläuft.

Die für das Förderband beschriebenen Vorteile treffen insbesondere auch dann zu, wenn das Förderband als Entladeeinrichtung eines Nutzfahrzeugs vorgesehen ist und am Boden eines Laderaums dieses Nutzfahrzeugs vorgesehen ist.

Der vorliegende Vorschlag wird anhand der rein schematischen Darstellungen nachfolgend näher erläutert. Dabei zeigt
- Fig. 1: einen vertikalen Schnitt durch den Ausschnitt eines Förderbandes,
- Fig. 2: eine perspektivische Ansicht auf einen Ausschnitt eines Führungsprofils mit darin laufendem elastischem Zugelement, und
- Fig. 3: ein als Antriebselement für das Band des Förderbandes ausgestaltetes Umlenkelement in perspektivischer Darstellung.

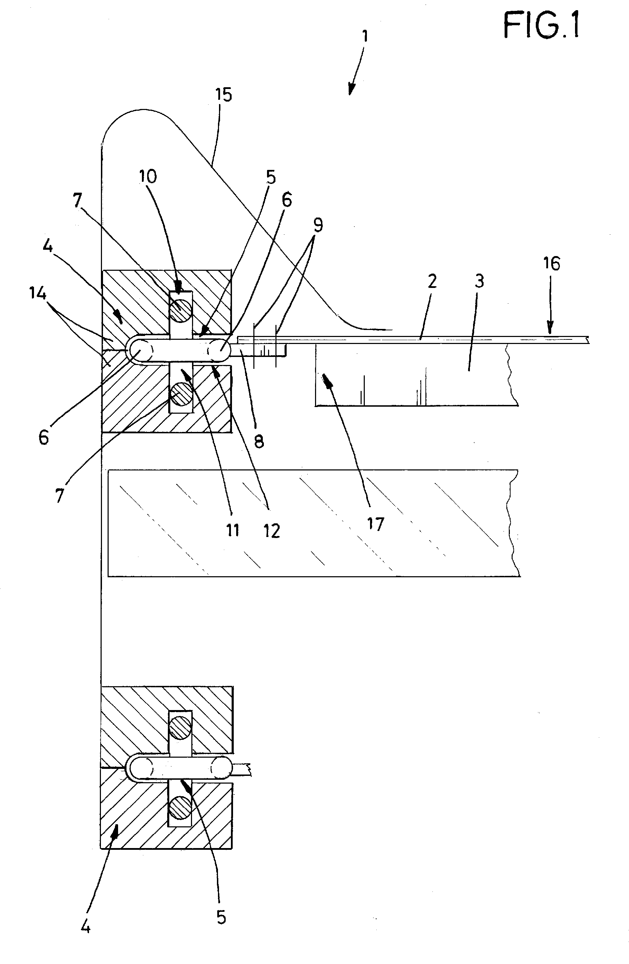

In Fig. 1 ist mit 1 insgesamt ein Förderband bezeichnet, wobei das umlaufende Band mit 2 gekennzeichnet ist. Das Obertrum des Bandes 2 stützt sich auf einen Tisch 3 ab, der als Gitterrost aus GFK ausgestaltet ist.

Seitlich neben dem Band 2 ist ein Führungsprofil 4 vorgesehen, welches horizontal geteilt ist und aus zwei identischen, symmetrisch zueinander angeordneten Halbprofilen aus einem gleitfreudigen Kunststoff besteht. In dem Führungsprofil 4 ist eine Kette 5 derart geführt, dass sie ausschließlich in Längsrichtung des Führungsprofils 4 beweglich ist. Die Kette 5 ist als Gliederkette ausgestaltet, deren einzelnen Kettenglieder jeweils oval geformt sind. Dabei wechseln sich horizontal ausgerichtete Glieder 6 und vertikal ausgerichtete Glieder 7 ab, und in Fig. 1 ist durch entsprechende Kreise angedeutet, wie die einzelnen Glieder 6 und 7 ausgerichtet sind.

An die horizontal ausgerichteten Glieder 6 schließen Mitnehmer 8 an, die als Flacheisen ausgestaltet sind und mit den Gliedern 6 verschweißt sind. Die Mitnehmer 8 sind ihrerseits mit dem Band 2 verbunden und zwar durch Bolzen 9, die als Niet, als Schraube o. dgl. ausgestaltet sein können. Je höher die Anzahl der Glieder 6 der Kette 5 ist, die mit Mitnehmern 8 versehen sind, desto gleichmäßiger erfolgt die Kraftübertragung von der Kette 5 auf das Band 2. Bei dem dargestellten Ausführungsbeispiel ist daher vorgesehen, dass sämtliche horizontalen Glieder 6 mit jeweils einem Mitnehmer 8 versehen sind.

Die Kette 5 verläuft in einer Ausnehmung 10 des Führungsprofils 4. Diese Ausnehmung 10 ist insofern im Wesentlichen C-förmig umrandet, als sie einerseits einen Hohlraum 11 aufweist, der nahezu vollständig von dem Führungsprofil 4 umgeben ist und andererseits einen Schlitz 12, der vom Hohlraum 11 eine Verbindung zur äußeren Oberfläche des Führungsprofils 4 schafft. In Fig. 1 ist dabei vorgesehen, dass die liegend ausgerichteten Glieder 6 der Kette 5 sich bis in den Schlitz 2 hinein erstrecken, und dass die Mitnehmer 8 außerhalb des Führungsprofils 4 vorgesehen sind.

Weiterhin ist in Fig. 1 angedeutet, dass auch das Untertrum der Kette 5 in einem gleichartigen Führungsprofil 4 geführt ist.

Weiterhin ist aus Fig. 1 ersichtlich, dass ein mittlerer Bereich des Bandes 2 als Förderbereich 16 gekennzeichnet ist, während zu den Mitnehmern 8 hin das Band 2 einen Randbereich 17 aufweist. Eine Dichtung 15 ist als Dichtungsblech ausgestaltet, welches sich vom Bereich oberhalb des Führungsprofils 4 bis an das Band 2 erstreckt. Dadurch, dass die Randbereiche 17 des Bandes 2 dort an ihrer äußeren Oberfläche glatt sind, wo die Dichtung 15 an das Band 2 anschließt, kann ein optimal dichter Anschluss der Dichtung 15 an das Band 2 gewährleistet werden.

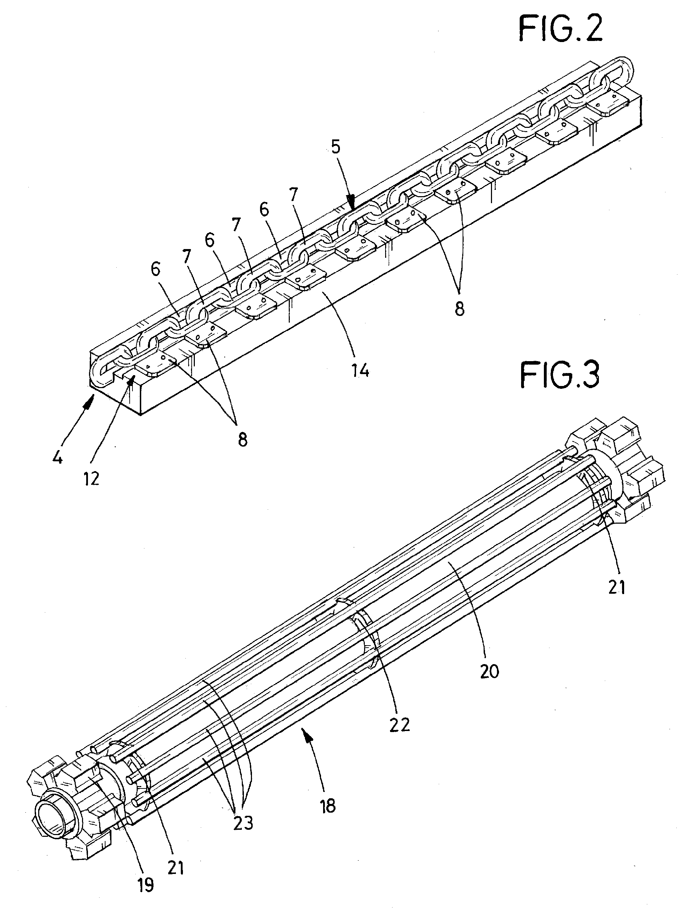

In Fig. 2 ist ein zweites Ausführungsbeispiel eines Führungsprofils 4 dargestellt, welches im Wesentlichen dem Führungsprofil 4 der Fig. 1 entspricht. Von den beiden identischen, jedoch symmetrisch zueinander angeordneten Halbprofilen 14 ist lediglich das untere Halbprofil 14 dargestellt und die Anordnung der Kette 5 mit ihren liegenden Gliedern 6 und den stehenden Gliedern 7 innerhalb des Führungsprofils 4 ist aus Fig. 2 ersichtlich.

Das Ausführungsbeispiel der Fig. 2 unterscheidet sich von dem der Fig. 1 darin, dass der Schlitz 12 bei dem Ausführungsbeispiel der Fig. 2 länger bemessen ist und gestuft ausgestaltet ist. Während sich die liegenden Glieder 6 in einem breiteren Abschnitt des Schlitzes 12 bewegen, sind die Mitnehmer 8 in einem engeren bzw. schmaleren Abschnitt des Schlitzes 12 vorgesehen, so dass nicht nur die Kette 5, sondern auch die Mitnehmer 8 und der äußere Teil des Randbereiches 17 des Bandes 2 im Führungsprofil 4 geführt ist. Auf diese Weise ist der Randbereich 17 dort, wo er an die Mitnehmer 8 anschließt, optimal gegen Beschädigungen geschützt.

Während die beiden Ketten 5 beiderseits des Bandes 2 erste Antriebselemente des Förderbandes 1 darstellen, ist in Fig. 3 ein weiteres Antriebselement dargestellt, welches ebenfalls auf das Band 2 einwirkt und in Form eines Umlenkelementes 18 ausgestaltet ist, um welches das Band 2 an einem seiner beiden Enden umläuft und vom Obertrum in das Untertrum des Bandes 2 umgelenkt wird. Bei dem Umlenkelement 18 handelt es sich um eine angetriebene Welle 19, die einen mittleren, zylindrischen Achskörper 20 aufweist, auf dem über die Länge des Achskörpers 20 verteilt drei Abstandsringe 21 und 22 vorgesehen sind. Die beiden äußeren Abstandsringe sind mit 21 gekennzeichnet, während ein mittlerer Abstandsring mit 22 bezeichnet ist. Die Abstandsringe 21 und 22 unterscheiden sich dadurch, dass die beiden äußeren Abstandsringe 21 einen geringeren Außendurchmesser aufweisen als der mittlere Abstandsring 22.

Die Abstandsringe 21 und 22 tragen an ihrem äußeren Umfang parallel zum Achskörper 20 verlaufende Hüllstäbe 23, wobei jeder Hüllstab 23 aufgrund der unterschiedlichen Außendurchmesser der Abstandsringe 21 und 22 einen gebogenen Verlauf aufweist und somit insgesamt dem Umlenkelement 18 eine ballige äußere Hüllkontur vermittelt wird, welche die Einleitung der Antriebskraft von dem Umlenkelement 10 auf das Band 2 in der Mitte des Bandes 2, nämlich in der Mitte des Förderbereichs 16 begünstigt und somit, einen Schräglauf des Bandes 2 verhindernd, zum störungsfreien Gleichlauf des Bandes 2 und somit zum störungsfreien Betrieb des gesamten Förderbandes 1 beiträgt.

## Patentansprüche

1. Förderband (1),
mit einem umlaufenden, um zwei Umlenkelemente geführten Band (2),
und mit Antriebselementen, welche seitlich neben dem Band (2) angeordnet sind, zusammen mit dem Band (2) beweglich sind, und mit dem Band (2) antriebswirksam verbunden sind, derart, dass durch die Bewegung der Antriebselemente das Band (2) mitgenommen wird,
**dadurch gekennzeichnet,**
**dass** die Antriebselemente beiderseits des Bandes (2) jeweils ein flexibles Zugelement aufweisen,
sowie Mitnehmer (8), die einerseits am Antriebselement und andererseits am Band (2) befestigt sind,
wobei das flexible Zugelement im Querschnitt höher ausgestaltet ist als die Mitnehmer (8),
und innerhalb eines Führungsprofils (4) verläuft, welches eine im Wesentlichen C-förmig umrandete Ausnehmung (10) aufweist,
wobei die Ausnehmung (10) erstens einen Hohlraum (11) und zweitens einen daran anschließenden Schlitz (12) bildet,
und wobei sich das flexible Zugelement längs durch den Hohlraum (11) erstreckt und durch den Schlitz (12) hindurch mit dem Band (2) verbunden ist.

2. Förderband nach Anspruch 1,
**dadurch gekennzeichnet,**
**dass** das flexible Zugelement als Kette (5) ausgestaltet ist.

3. Förderband nach Anspruch 2,
**dadurch gekennzeichnet,**
**dass** die Kette (5) als Gliederkette mit im Wesentlichen ovalen Gliedern (6, 7) ausgestaltet ist.

4. Förderband nach Anspruch 2 oder 3,
**dadurch gekennzeichnet,**
**dass** die Mitnehmer (8) als Flacheisen ausgestaltet sind, die jeweils an einem Glied (6) der Kette (5) befestigt sind.

5. Förderband nach Anspruch 4,
**dadurch gekennzeichnet,**
**dass** die Mitnehmer (8) jeweils an ein Glied (6) der Kette (5) angeschweißt sind.

6. Förderband nach einem der vorhergehenden Ansprüche,
**dadurch gekennzeichnet,**
**dass** das Obertrum des Bandes (2) auf einem Tisch (3) abgestützt läuft
und der Tisch (3) als aus mehreren Stäben gebildeter Gitterrost ausgestaltet ist,
wobei der Gitterrost Stäbe mit einem flachen Querschnittsprofil aufweist, deren Querschnittsprofil hochkant ausgerichtet ist.

7. Förderband nach Anspruch 6,
**dadurch gekennzeichnet,**
**dass** der Gitterrost Stäbe aus einem Kunststoffmaterial aufweist.

8. Förderband nach einem der vorhergehenden Ansprüche,
**dadurch gekennzeichnet,**
**dass** auch ein Umlenkelement (18) als Antriebselement ausgestaltet ist,
wobei das Umlenkelement (18) als angetriebene Welle (19) ausgestaltet ist, deren Drehachse quer zur Laufrichtung des Bandes (2) ausgerichtet ist,
und die eine ballig geformte Oberfläche aufweist.

9. Förderband nach einem der vorhergehenden Ansprüche,
**dadurch gekennzeichnet,**
**dass** das Band (2) einen mittleren Bereich aufweist, der zur Aufnahme des zu transportierenden Guts vorgesehen ist und als Förderbereich (16) bezeichnet ist,
und beiderseits des Förderbereichs (16) jeweils einen Randbereich (17) aufweist,
und **dass** die Oberseite des Bandes (2) in den beiden seitlichen Randbereichen (17) Zonen aufweist, die in Bandlaufrichtung glatt ausgestaltet sind,
und **dass** sich beiderseits des Förderbereichs (16) jeweils eine seitliche Dichtung (15) bis an die glatte Zone des jeweiligen Randbereichs (17) erstreckt.

10. Förderband nach einem der vorhergehenden Ansprüche,
**dadurch gekennzeichnet,**
**dass** die Oberseite des Bandes (2) profiliert ausgestaltet ist, derart, dass sie Förderhilfen in Form von Erhebungen aufweist.

11. Förderband nach Anspruch 10,
**dadurch gekennzeichnet,**
**dass** die Förderhilfen in das Band (2) einvulkanisiert sind, derart, dass das Band (2) eine geschlossene Oberseite aufweist.

12. Förderband nach einem der vorhergehenden Ansprüche,
**dadurch gekennzeichnet,**
**dass** die Antriebselemente wenigstens ein weiteres flexibles Zugelement aufweisen, welches gemeinsam mit dem Band (2) umläuft und zwischen den beiderseits des Bandes (2) vorgesehenen flexiblen Zugelementen angeordnet ist.

13. Förderband nach einem der vorhergehenden Ansprüche,
**dadurch gekennzeichnet,**
**dass** Spannelemente vorgesehen sind, mittels welcher die Spannung einerseits des Bandes (2) und andererseits der flexiblen Zugelemente unabhängig voneinander einstellbar ist.

14. Förderband nach einem der vorhergehenden Ansprüche,
**dadurch gekennzeichnet,**
**dass** das Band (2) mit Stabilisierungselementen versehen ist, die sich quer zur Bandlängsachse erstrecken.

15. Förderband nach einem der vorhergehenden Ansprüche,
**dadurch gekennzeichnet,**
**dass** auch das Untertrum des flexiblen Zugelements in einem Führungsprofil (4) geführt ist, welches auf beiden Längsseiten des Bandes (2) die dortigen flexiblen Zugelemente in einem vorbestimmten Abstand zueinander führt.

16. Förderband nach einem der vorhergehenden Ansprüche,
**dadurch gekennzeichnet,**
**dass** im Bereich einer Bandumlenkung ein Antriebselement angeordnet ist, welches auf ein Zugelement antriebswirksam einwirkt,
und welches das Zugelement in seitlicher Richtung führt.

17. Nutzfahrzeug,
mit einem Laderaum
und einem am Boden des Laderaums vorgesehenen Förderband (1),
**dadurch gekennzeichnet,**
**dass** das Förderband (1) nach einem der vorhergehenden Ansprüche ausgestaltet ist.
